# EUROPEAN PATENT APPLICATION

(11) **EP 4 145 219 A1**
(43) Date of publication of application: **08.03.2023**
(21) Application number: 21194707.2
(22) Date of filing: 03.09.2021
(51) Int. Cl.: G03B 11/04, G03B 17/02, G08B 13/196

(54) **SHIELDING STRUCTURE FOR A CAMERA**

(71) Applicant: Robert Bosch GmbH, 70442 Stuttgart (DE)
(72) Inventor: Anzaldi, Daniele, 5653 KS Eindhoven (NL)

(57) **Abstract**

The invention relates to a shielding structure (100) for protecting a camera from weather conditions comprising a housing (2) for accommodating a camera head (7) having on its outer surface at least two longitudinal grooves (21), and a weather shield (4) having a C-shaped cross-sectional area with a center side and two lateral sides, the weather shield (4) comprising two installation ribs (42) arranged opposite each other on both lateral sides on an inner side of the weather shield (4) facing the housing (2), wherein the shielding structure (100) is configured in such a way that the weather shield (4) can be attached to the housing (2) and pushed onto the housing (2) by pressure until each of the installation ribs (42) engages one of the longitudinal grooves (21).

## Description

The present invention relates to a shielding structure for a camera, the shielding structure comprising a housing and a weather shield, a camera including the shielding structure, and a method for installing the shielding structure.

### Background of the invention

Surveillance cameras are known that are equipped with a weather shield to protect the camera lens from direct sunlight and rainwater or snow. The position of the weather shield is set by a user, depending on the field of view of the lens used and the orientation of the camera to the sun during the day. Since surveillance cameras are often installed several meters above the ground, adjusting the weather shield can be difficult and even dangerous. Therefore, there is a need for a weather shield that can be easily mounted with only one hand to increase the safety of the user during the adjustment process.

US D836,149 S shows a monitoring camera with a weather shield on the top of the camera body.

### Disclosure of the invention

According to the independent claims, a shielding structure for a camera comprising a housing and a weather shield, a camera including the shielding structure and a method for installing the shielding structure are disclosed. Further preferred developments are described by the dependent claims and the description below.

The proposed invention allows to assemble the weather shield on the housing only with one hand. The weather shield is then made captive to the housing and cannot fall of or be misplaced by mistake. The weather shield can be moved back and forth sliding along the grooves and then the knob screw (the knob itself can also be captive in the weather shield) can be finally tightened with one hand to secure the connection.

Manual installations and adjustments of parts on security cameras that are hanging few meters high from the ground can be difficult and in some cases un-safe, in particular if the installer is standing on a ladder. Using the invention, the installer can do all operations with one hand to make sure he can hold the ladder with the other free hand. In case both hands are temporarily needed by the installer for adjustments/assembly the risk of dropping down parts is minimized as much as possible by the design in order to avoid hurting someone passing/standing below.

In some cases weather shields are made captive in the housing by three or more parts being pre-assembled. According to the invention the weather shield is made captive by means of features that are integrated in just two parts (housing and weather shield) making the assembly process simpler and safer. In some other cases weather shields aren't made captive at all, thus requiring the installer to be very careful about not dropping by accident the weather shield before securing it with a screw. According to the invention the weather shield is easily pre-fixated onto the housing thus preventing to drop it down or accidentally misplacing it.

The shielding structure for protecting a camera from weather conditions comprises a housing for accommodating a camera head and a weather shield for covering the lens of the camera head.

The weather shield has a C-shaped cross-sectional area with a center side and two lateral sides, and has two installation ribs arranged opposite each other on both lateral sides on an inner side of the weather shield facing the housing. The housing has on its outer surface at least two longitudinal grooves for receiving the ribs. The shielding structure is configured in such a way that the weather shield can be attached to or put on the housing and pushed onto the housing by pressure until each of the installation ribs engages one of the longitudinal grooves.

In other words, the shape of the weather shield is adapted to the shape of the housing so that the weather shield can be easily pushed or clipped onto the housing. Furthermore, the position of the installation ribs on the lateral sides of the C-shaped weather shield allows the ribs to securely engage the longitudinal grooves of the housing. So due to the special design or shape of the weather shield and the materials used the weather shield can be easily mounted to the housing by engaging/snapping the two installation ribs with the longitudinal grooves, so that even an installation at a great height poses no danger to a user.

According to an embodiment, the housing comprises at least one threaded bore arranged between the at least two longitudinal grooves. Especially, the threaded bore is located on a different side of the housing than the grooves, with which the installation ribs engage. Accordingly, the weather shield comprises an elongated hole facing the threaded bore of the housing, in which a knob screw is arranged, which is configured to be screwed into the threaded bore of the housing. Preferably, the knob screw is captively arranged in the elongated hole. The elongated hole together with the knob screw provide for a limited longitudinal movement.

This means that the final desired position of the weather shield relative to the housing may be easily achieved by screwing the knob screw into the threaded bore and adjusting the weather shield by sliding it along the longitudinal grooves from one end of the elongated hole to the other end. Since even the knob screw may be captively attached to the elongated hole, there are no parts that can fall off when the weather shield is installed.

Preferably, the installation rips can be arranged only on a part of the length of the weather shield, e.g. for limiting its longitudinal movement. For example, the movement or sliding of the installation rips in the grooves may be limited to the length between the elongated hole and one end of the housing. Preferably, the longitudinal grooves are arranged along the entire length of the housing, especially for facilitating its manufacture by extrusion.

According to an embodiment, the housing extends longitudinally and has an essentially rectangular, especially essentially square cross-sectional area with rounded corners, wherein the at least two longitudinal grooves are arranged opposite each other on two opposite longitudinal sides of the housing. Such a shape can match well with the C-shaped shield so that the weather shield can be easily pushed or clicked onto the housing.

According to an embodiment, a plurality of reinforcing rips is arranged between the two installation ribs of the weather shield on the side facing the housing. It is also possible that the reinforcing ribs are arranged on the outer surface of the housing. These ribs may support the elastic deformation of the weather shield when pushed onto the housing. Especially, the reinforcing ribs are arranged along the C-shaped contour of the weather shield starting at one installation rib and ending on the other installation rib. Preferably, the reinforcing ribs run in parallel.

Preferably, the reinforcing rips may be arranged inside a longitudinal area of the weather shield corresponding to the length of the installation ribs. Further preferably, the reinforcing ribs may have different distances to each other (different "rib densities", i.e. number of reinforcing ribs per length unit) in different sections. Preferably, the rib density may be higher in a first section located between one end of the weather shield and the beginning of the elongated hole than in a second section along the elongated hole. In other words, in the first section the reinforcing ribs are arranged closer to each other than in the second section.

Preferably, no reinforcing ribs are arranged in a third section located between the end of the elongated hole and the other end of the weather shield.

According to an embodiment, the installation ribs are designed with a nominal interference to the bottoms of the longitudinal grooves. In other words, the minimal ("horizontal") distance between the two ribs is smaller than the minimal ("horizontal") distance between the two groove bottoms. This results in constant radial preload, whose resulting friction helps holding the weather shield firmly without loss of positioning due to gravitation, wind or other external weak forces acting on the part.

According to an embodiment, the housing comprises at least two reinforcing ribs extending in the axial direction of the housing on its inner surface. Preferably, the reinforcing ribs are arranged opposite to the longitudinal grooves or in an area opposite the longitudinal grooves. These ribs stabilize the housing in the regions where the longitudinal grooves may have weakened the structure. Furthermore, they allow for aligning the camera head inside the housing. Preferably, additional reinforcing ribs are arranged in the middle of each wall of the housing.

According to an embodiment, the shielding structure further comprises a back cover and a front cover, which are attached to the housing. Preferably, the back cover forms a first circumferential protrusion at one end of the housing and the front cover forms a second circumferential protrusion at the opposite end of the housing, the protrusions limiting a movement of the wind shield relative to the housing. As a result, even if the user does not pre-tighten the knob screw in the elongated hole, the weather shield cannot be easily removed from the housing since the front and back cover parts act as end-stops for the installation ribs.

According to an embodiment, the housing comprises a plurality of pairs of longitudinal grooves on its outer surface, each pair being arranged on two opposite sides of the housing opposite to each other and extending in the axial direction of the housing on its outer surface. Preferably, the housing further comprises a plurality of threaded bores arranged between two longitudinal grooves. Arranging more than two longitudinal grooves on two opposite sides of the housing in connection with more than one threaded bore allows for a variable positioning of the weather shield on the housing. In other words, the weather shield may be arranged on each of the four sides of the housing. This allows for a lateral protection from weather conditions and simplifies the assembly of the camera. According to an embodiment, the weather shield comprises a protrusion on the surface facing the housing which is configured to form a clearance between the housing and the weather shield. The protrusion is advantageously located at the center side of the weather shield to form the clearance in the installation direction. In this way, the protrusion ensures that the installation ribs cannot be pushed beyond the grooves.

According to the invention, there is further provided a camera comprising the shielding structure described above, a camera head accommodated in the housing of the shielding structure and a base for applying the camera to a support structure.

Summarizing the claimed subject matter allows for easily and securely installing a weather shield to a housing of a camera. Due to the pre-fixing of the weather shield by engaging its installation ribs with the longitudinal grooves of the housing an easy and secure adjustment of the weather shield is possible.

Further advantages and embodiments of the invention can be seen in the following description and the accompanying figures. The invention is illustrated schematically by means of examples in the figures and is described below with reference to the figures.

### Brief description of the figures

Figure 1 shows an example of a surveillance camera according to the present invention in a perspective side view;
Figure 2 exemplarily shows the shielding structure according to the present invention in a perspective side view;
Figure 3 shows a cross-sectional view of the shielding structure of Fig. 2;
Figure 4 shows an example of a weather shield according to the present invention in a back view and in a perspective side view;
Figure 5 shows an example of a housing according to the present invention in a front view and in a perspective side view;
Figures 6a to 6c show exemplarily an installation process of the shielding structure according to the present invention in a front view;
Figure 7a and 7b show the shielding structure of Fig. 2 with the weather shield in a forward position in Fig. 7a and the weather shield in a rearward position in Fig. 7b in a perspective side view;
Figure 8 shows a longitudinal section and an enlarged section of the shielding structure of Fig. 7b illustrating the first circumferential protrusion formed by the back cover; and
Figure 9 shows a longitudinal section and an enlarged section of the shielding structure of Fig. 7a illustrating the second circumferential protrusion formed by the front cover.

### Embodiments of the invention

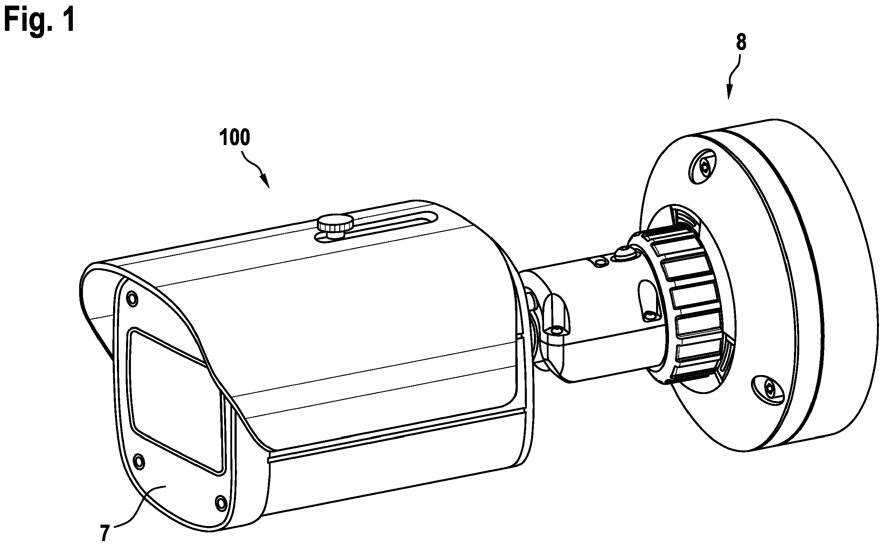

Figure 1 depicts a preferred embodiment example of a surveillance camera according to the present invention. The camera comprises a shielding structure 100 according to a preferred embodiment of the invention accommodating a camera head 7, and a basis 8 for attaching the camera to a support structure. The basis 8 is mechanically connected to the shielding structure 100.

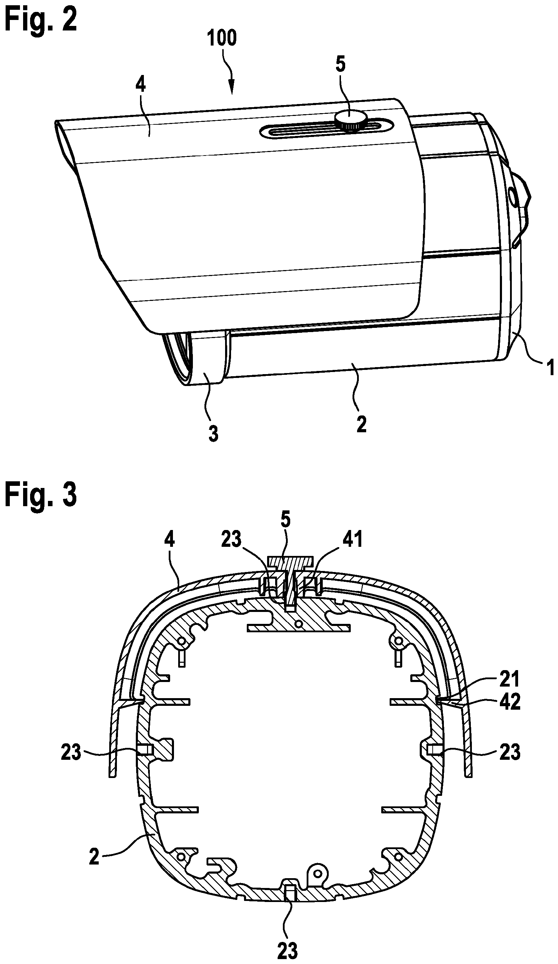

Figure 2 depicts the shielding structure 100 of the camera of Fig. 1 in a side view. Here the shielding structure 100 comprises a weather shield 4 and a housing 2, as well as a back cover 1, a front cover 3 and a knob screw 5. The weather shield 4 is used to protect the lens of the camera from direct exposure to sun light and rainwater or snow. The weather shield position is intended to be adjusted longitudinally by a user, depending on the field of view of the lens and the orientation of the camera relative to the sun during the day. Once the correct position is found, the weather shield 4 can be secured by firmly tightening the knob screw 5 into a threaded bore in the housing 2.

Figure 3 shows a cross-sectional view of the shielding structure of Fig. 2, comprising the weather shield 4, the housing 2 and the knob screw 5. The weather shield has a C-shaped cross-sectional area with a center side (top) and two lateral sides (left and right). The housing 2 has an essentially square shape with rounded corners. The weather shield 4 is clipped onto the housing 2 by installation ribs 42 arranged opposite each other on both lateral sides on an inner side of the weather shield 4 facing the housing 2 engaging longitudinal grooves 21 arranged on the outer lateral sides of the housing. The installation ribs 42 are intended to snap-into the grooves 21 during assembly and slide in for position adjustment of the weather shield 4 relative to the housing 2. The knob screw 5 is tightened into the threaded bore 23 of the housing 2 for fixing the weather shield 4 relative to the housing 2.

Furthermore, in the shown example four threaded bores 23 and four pairs of longitudinal grooves 21 are provided on the outside of the housing, which allow for mounting the weather shield 4 at different positions.

A protrusion 41 for providing clearance to the housing 2 is located on the center side on an inner side of the weather shield 4 facing the housing 2. The weather shield 4 comprises reinforcing ribs 44 running in parallel from one of the installation ribs 42 to the other of the installation ribs 42.

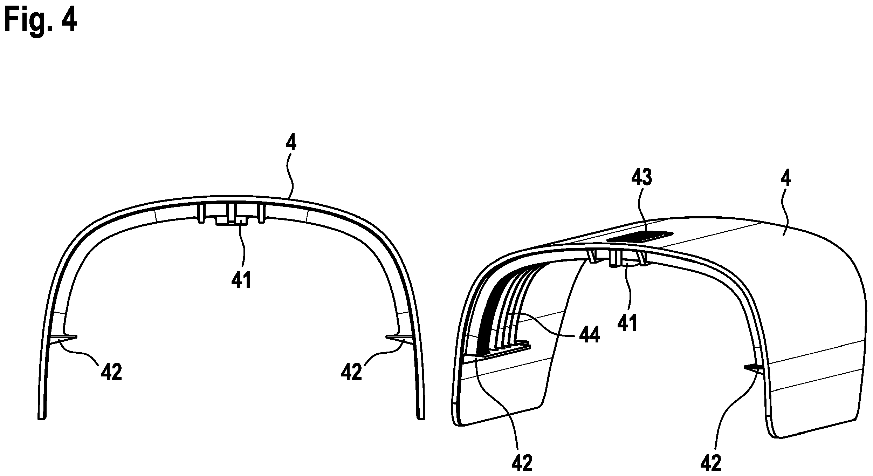

Figure 4 shows an example of the weather shield 4 according to the present invention. The left side of Fig. 4 shows a back view, and the right side of Fig. 4 shows a perspective view of the weather shield 4. The installation ribs 42, which in mounting condition engage in the longitudinal grooves 21 of the housing, are clearly shown in both views. Furthermore, the protrusion 41 for providing clearance to the housing 2 is also visible. In the shown example the protrusion 41 is arranged underneath the elongated hole 43, through which the knob screw is screwed into the housing 2. On the right side of Fig. 4, between the two installation ribs 42, the reinforcing ribs 44 are shown, which may support the elastic deformation of the weather shield when pushed onto the housing 2.

The reinforcing ribs 44 are arranged along the C-shaped contour of the weather shield 4 and cover a longitudinal area of the weather shield 4 corresponding to the length of the installation ribs 42. The number of reinforcing ribs 44 per length unit is higher (which means the reinforcing ribs 44 are arranged closer to each other, or have a higher "density") in a first section located between the rear end of the weather shield 4 and the beginning of elongated hole 43 than in a second section in which the elongated hole 43 is located. There are no reinforcing ribs 44 in a third section located between the end of elongated hole 43 and the rear end of the weather shield 4. The reinforcing rips 44 maintain the C-shaped contour of the weather shield 4 when it is mounted on the housing 2 and support the engagement of the installation rips 42 in the longitudinal grooves 21 of the housing. The installation ribs 42 have a protrusion/step on the side facing the back cover forming an end stop at the back cover which limits the lateral movement of the weather shield.

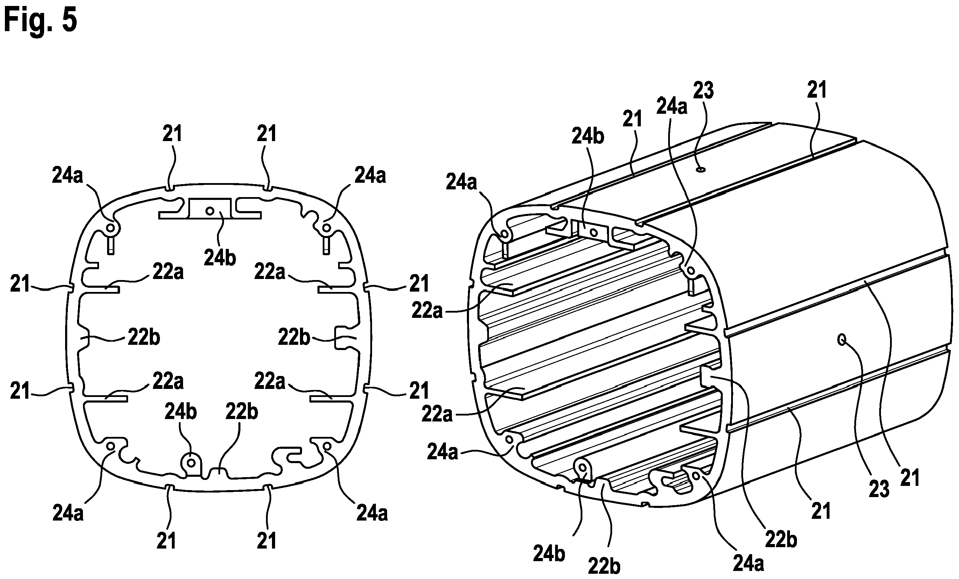

Figure 5 shows an example of the housing according to the present invention. The left side of Fig. 5 shows a front view, and the right side of Fig. 5 shows a perspective view of the housing 2. Again, the depicted example of the housing 2 shows four pairs of longitudinal grooves 21 on its outer surface for mounting the weather shield 4 at different positions. Threaded bores 23, in which the knob screw 5 can be screwed in for adjusting and finally fixing the weather shield, are disposed between the longitudinal grooves 21.

Inside the housing 2, two different types of reinforcing ribs 22a, 22b are arranged in the longitudinal direction of the housing. Wider ribs 22b are arranged in the center of each side of the housing 2. Narrower ribs 22a are additionally arranged on sides of the housing 2 and have a greater depth extending into the interior of the housing 2. These ribs 22a, 22b can be used for stabilizing the housing and/or for mounting elements (camera head etc.) in the housing. Protrusions or ribs 24a with bores for receiving screws are arranged in each corner of the housing 2. These bores can be used for mounting the front and the back cover to the housing. In addition, approximately in the middle of each of the top and bottom sides, two mounting options 24b are provided for fixing elements (camera head etc.) inside the housing 24b.

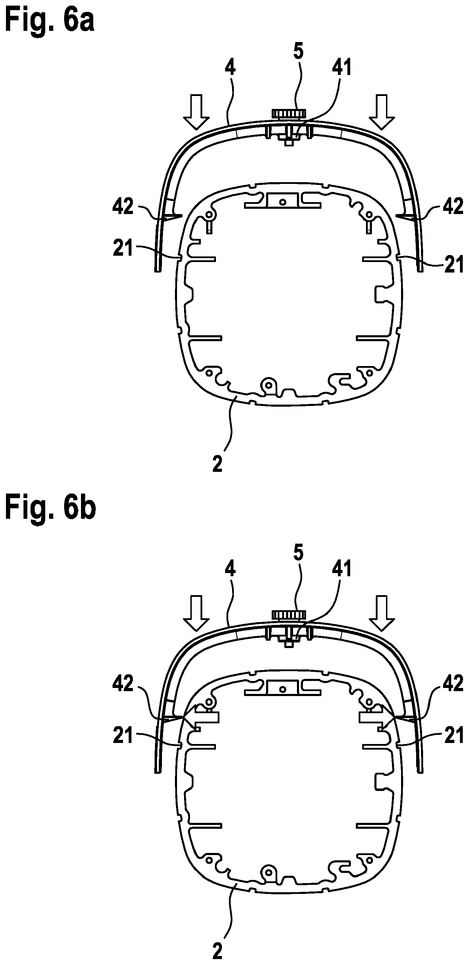

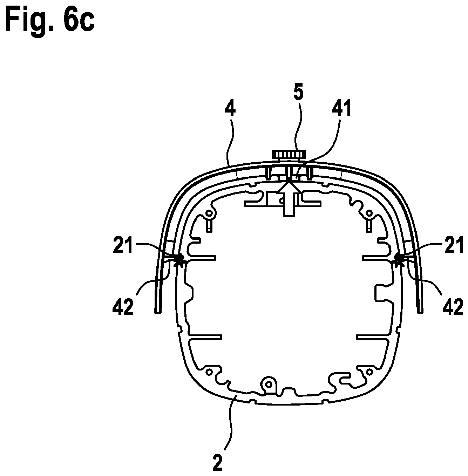

The installation process of the weather shield 4 on the housing 2 according to a preferred embodiment of the present invention is exemplarily shown in the Figures 6a to 6c.

Figure 6a shows the first stage of the installation process, in which the weather shield 4 is attached or put onto the housing and aligned to it (illustrated by the bold arrows). In this stage of the installation process the installation ribs 42 are still positioned with a distance to the outer surface of the housing 2.

In the next stage of the installation process shown in Fig. 6b, the installation ribs 42 of the weather shield 4 get in contact with the housing 2, and the weather shield 4 is pushed onto the housing 2 (illustrated by the bold arrows) so that the installation ribs 42 are pushed apart. During this process a reacting force is supported by the reinforcing ribs 44 on the inside of the weather shield.

In a last stage of the installation process, the installation ribs 44 reach the longitudinal grooves 21 and engage or snap into them, providing a typical snap-in feedback (illustrated by the stars depicted next to the longitudinal grooves 21). In this context, the protrusion 41 acts as end-stop and ensures that the installation ribs 42 cannot be pushed beyond the grooves 42. Once the installation ribs 21 have engaged in the longitudinal grooves 42, they are locked therein and cannot be easily removed.

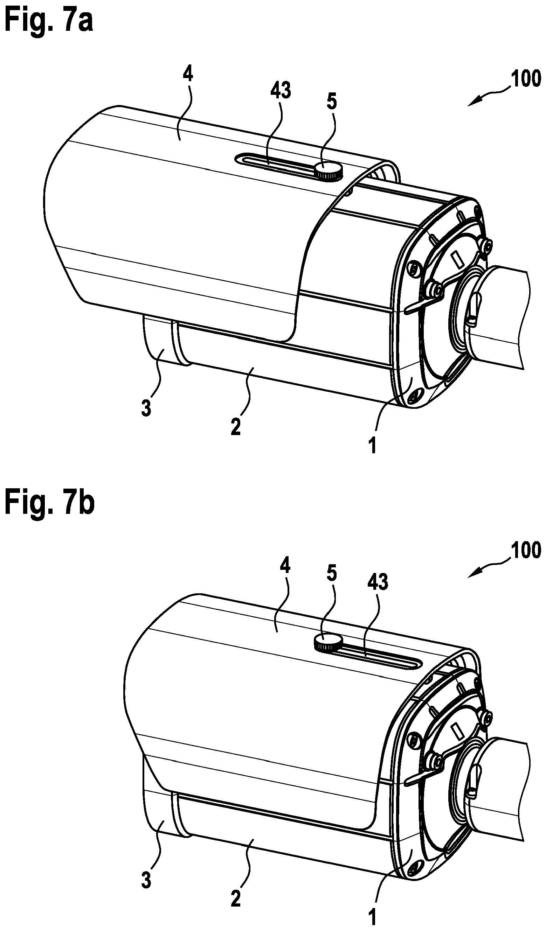

Figure 7a and 7b show the shielding structure of Fig. 2 with the weather shield 4 in a forward position in Fig. 7a and the weather shield 4 in a rearward position in Fig. 7b. The arrangement of the weather shield 4 in axial direction of the housing 2 is supported by pre-tightening the knob screw 5 into the elongated hole 43 in order to give an end-stop to the forward/backward position of the weather shield 4. Preferably, the knob screw 5 is captive in the elongated hole 43 of the weather shield 4 so it cannot be easily lost. Then the adjustment of the weather shield in forward or rearward direction can be safely carried out. During this process the installation ribs 42 slide along the longitudinal groves 21, which act as a guide for the weather shield during the position adjustment. In case the desired position of the weather shield 4 is arrived at, the knob screw 5 may be tightened completely.

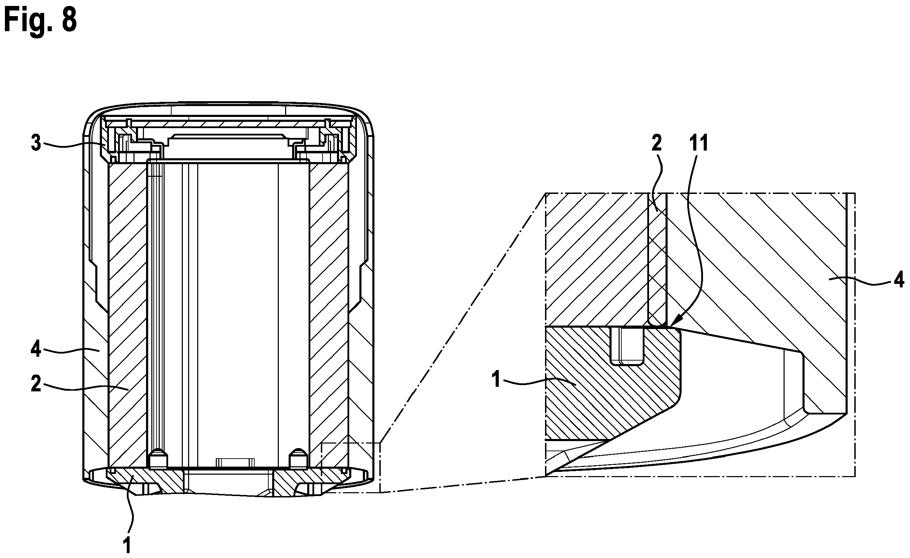

Figure 8 shows a longitudinal section and an enlarged section of the shielding structure of Fig. 7b illustrating a first circumferential protrusion formed by the back cover 1. In the depicted example the weather shield 4 is in its rearward position, in which the installation ribs of the weather shield abuts the back cover 1. In the enlarged section of Fig. 8, the first protrusion 11 formed by the back cover 1 is shown.

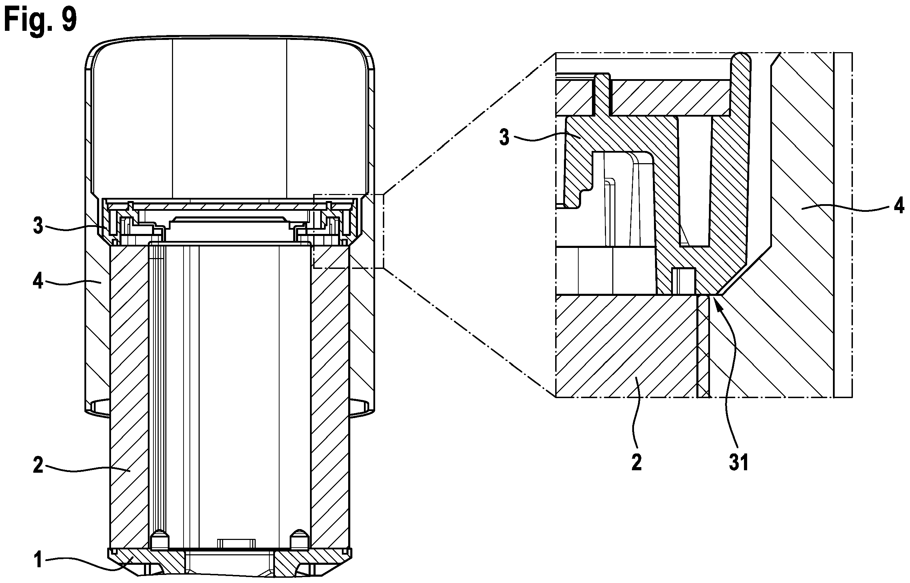

Figure 9 shows a longitudinal section and an enlarged section of the shielding structure of Fig. 7a illustrating a second circumferential protrusion formed by the front cover 3. In the depicted example the weather shield 4 is in its forward position, in which the installation ribs of the weather shield abuts the front cover 3. In the enlarged section of Fig. 9, the second protrusion 31 formed by the front cover 3 is shown. It is shown that the installation ribs have a protrusion/step which abuts the second protrusion formed by the front cover 3.

Thus, even if the knob screw 5 is not pre-tightened in the elongated hole 43 after engaging the weather shield 4 into the longitudinal grooves 21, the weather shield 4 cannot be easily removed due to the front and back cover parts 1, 3 which act as end-stops for the installation ribs 21.

Summarizing, the invention allows for easily and securely installing a weather shield to a housing of a camera. Due to the pre-fixing of the weather shield by engaging its installation ribs with the longitudinal grooves of the housing an easy and secure adjustment of the weather shield is possible.

## Claims

1. A shielding structure (100) for protecting a camera from weather conditions comprising
a housing (2) for accommodating a camera head (7) having on its outer surface at least two longitudinal grooves (21), and
a weather shield (4) having a C-shaped cross-sectional area with a center side and two lateral sides, the weather shield (4) comprising two installation ribs (42) arranged opposite each other on both lateral sides on an inner side of the weather shield (4) facing the housing (2),
wherein the shielding structure (100) is configured in such a way that the weather shield (4) can be attached to the housing (2) and pushed onto the housing (2) by pressure until each of the installation ribs (42) engages one of the longitudinal grooves (21).

2. The shielding structure (100) according to claim 1, wherein
the housing (2) comprises at least one threaded bore (23) arranged between the at least two longitudinal grooves (21); and
the weather shield (4) comprises an elongated hole (43) facing the threaded bore (23) and a knob screw (5) arranged in the elongated hole (43) configured to be screwed into the threaded bore (23).

3. The shielding structure (100) according to claim 2, wherein the knob screw (5) is captively arranged in the elongated hole (43).

4. The shielding structure (100) according to any one of the preceding claims, wherein
the housing (2) extends longitudinally and has a square cross-sectional area with rounded corners, wherein the at least two longitudinal grooves (21) are arranged opposite each other on two opposite longitudinal sides of the housing (2).

5. The shielding structure (100) according to any of the preceding claims,
wherein the weather shield (4) comprises a plurality of reinforcing rips (44) between the two installation ribs (42).

6. The shielding structure (100) according to any of the preceding claims,
wherein the installation ribs (42) are designed with a nominal interference to the bottom of the longitudinal grooves (21).

7. The shielding structure (100) according to any of the preceding claims,
wherein the housing (2) comprises at least two reinforcing ribs (22) extending in longitudinal direction of the housing (2) on its inner surface.

8. The shielding structure (100) according to any of the preceding claims, further comprising a back cover (1) and a front cover (3), which are attached to the housing (2), the back cover (1) forming a first circumferential protrusion (11) at one end of the housing (2) and the front cover (3) forming a second circumferential protrusion at the opposite end of the housing (2), the protrusions limiting a movement of the wind shield (4) relative to the housing (2).

9. The shielding structure (100) according to any of the preceding claims,
wherein the housing (2) has a plurality of pairs of longitudinal grooves (21) on its outer surface, each pair of longitudinal grooves (21) being arranged on two opposite longitudinal sides of the housing (2) opposite to each other and configured to receive the two installation ribs (42), and a plurality of threaded bores (23) arranged between two longitudinal grooves (21).

10. The shielding structure (100) according to any of the preceding claims,
wherein the weather shield (4) comprises a protrusion (41) on the surface facing the housing (2) configured to form a clearance between the housing (2) and the weather shield (4).

11. A camera comprising the shielding structure (100) according to any one of the proceeding claims, a camera head (7) accommodated in the housing (2) of the shielding structure (100) and a base (8) for applying the camera to a support structure.

12. A method for installing the shielding structure (100) according to any of the preceding claims 1 to 10 comprising:
attaching a weather shield (4) on a housing (2);
pushing the weather shield (4) against the housing (2) until the two installation ribs (21) of the weather shield (4) engage with two longitudinal grooves (21) of the housing (2).

13. The method according to claim 12 comprising:
pre-fixing the weather shield (4) by screwing a knob screw (5) into a threaded bore (23) of the housing (2).

14. The method according to claim 12 or 13 comprising:
positioning the weather shield (4) relative to the housing (2) by sliding it in axial direction along the longitudinal grooves (21) of the housing (2).

15. The method according to any of claims 12 to 14 comprising:
fixing the weather shield (4) to the housing (2) by tightening the knob screw (5) into the threaded bore (23).
